# EUROPÄISCHE PATENTSCHRIFT

(11) **EP 4 420 769 B1**
(45) Veröffentlichungstag und Bekanntmachung des Hinweises auf die Patenterteilung: **22.10.2025**
(21) Anmeldenummer: 24158384.8
(22) Anmeldetag: 19.02.2024
(51) Int. Cl.: B01J 8/00, B65G 15/22, B01J 35/51

(54) **BANDFÖRDERMASCHINE**
BELT CONVEYOR MACHINE
MACHINE DE TRANSPORT À BANDE

(30) Priorität: 20.02.2023 DE 202023100798 U
(43) Veröffentlichungstag der Anmeldung: 28.08.2024
(73) Patentinhaber: SPM - Schütte Precision Machines GmbH, 58642 Iserlohn (DE)
(72) Erfinder: SCHÜTTE, Sebastian, 58675 Hemer (DE)
(74) Vertreter: Haverkamp Patentanwälte PartG mbB

(56) Entgegenhaltungen:
- EP-A1- 3 042 716
- EP-B1- 2 363 203
- US-A- 3 788 370
- US-B2- 8 166 811

## Beschreibung

Die Erfindung betrifft eine Bandfördermaschine zum Einfüllen von Katalysatormaterial in Katalysatorrohre eines industriellen Reaktors.

In industriellen Reaktoren werden großvolumige Reaktionen durchgeführt, welche typischerweise endo- oder exotherm ablaufen. Um die chemischen Reaktionen in einem solchen industriellen Reaktor zu beschleunigen oder erst technisch möglich zu machen, werden Katalysatoren eingesetzt. Katalysatoren sind Stoffe, die eine Reaktion unterstützen, an dieser jedoch nicht insofern teilnehmen, als dass sie verbraucht werden.

Katalysatoren werden technisch als Katalysatormaterial eingesetzt. Katalysatormaterial ist häufig als Granulat ausgebildet. Ein Trägerkörper, typischerweise auf Keramikbasis, ist hierzu mit einem Katalysatorstoff überzogen. Der Trägerkörper kann in verschiedensten Formen ausgestaltet sein: So sind hohlzylinderförmige Körper bekannt, die auch zusätzlich radial nach innen weisende Stege aufweisen, genauso wie kugelige Körper und weitere, häufig poröse Körper, die in ihrer Form undefiniert sind.

Zum Durchführen der chemischen Reaktion sind in einem industriellen Reaktor eine Vielzahl von parallel geschalteten Reaktorrohren (üblicherweise wenige bis 35.000 Stück) angeordnet, die durchaus mehrere Meter bis mehrere Zehn-Meter lang sein können. Der Durchmesser eines Rohres beträgt etwa 2 bis 20 Zentimeter. Größere und kleinere Durchmesser sind möglich. Der obere Abschluss dieser nebeneinanderliegenden Rohre wird als Rohrspiegel bezeichnet. In den Reaktorrohren ist das Katalysatormaterial angeordnet. Zum Durchführen der chemischen Reaktion in dem industriellen Reaktor werden die Edukte an der einen Seite des Rohres eingeleitet, innerhalb des Rohres findet die chemische Reaktion statt und das erhaltene Produkt wird an der anderen Seite des Katalysatorrohres ausgeleitet.

Um trotz der Parallelschaltung der einzelnen Rohre eine gleichartige Belastung der einzelnen Rohre zu erzielen, also: den Durchfluss in den einzelnen Rohren untereinander zu harmonisieren, müssen die einzelnen Rohre möglichst gleichmäßig mit dem Katalysatormaterial befüllt sein. Dies gilt nicht nur für die Menge an Katalysatormaterial an sich, sondern auch bezogen auf die Packungsdichte, die je nach Ausrichtung der einzelnen Katalysatormaterialelemente unterschiedlich sein kann.

Das Befüllen eines solchen Rohres erfolgt jedenfalls zu Wartungszwecken innerhalb des industriellen Reaktors, die Rohre werden hierzu nicht aus ihrer Position in dem industriellen Reaktor entfernt. Denn auch wenn das Katalysatormaterial an der chemischen Reaktion nicht teilnimmt, werden etwaige gewünschte, die Katalysatoroberfläche vergrößernde Poren durch Verunreinigungen zugesetzt. Auch ist eine Abnutzung des Katalysatormaterials durch mechanischen Verschleiß zu beobachten, sodass das Katalysatormaterial regelmäßig, etwa nach einigen, z. B. vier Jahren, ausgetauscht werden muss.

Zum vereinfachten Befüllen der Katalysatorrohre sind Befülleinrichtungen bekannt, die auf dem Rohrspiegel in einem industriellen Reaktor eingesetzt werden und mit denen Katalysatormaterial von oben in die einzelnen Rohre eingefüllt wird.

Eine Ausgestaltung einer Befülleinrichtung ist eine Bandfördermaschine wie im EP2363203 beschrieben.

Eine solche Bandfördermaschine ist üblicherweise auf einem Fahrgestell aufgebaut, welches etwa auf dem Rohrspiegel, nachfolgend allgemein als Standebene angesprochen, aufgestellt ist. Sie umfasst zum Einfüllen von Katalysatormaterial in ein Katalysatorrohr eines industriellen Reaktors zumindest einen Vorkammerbereich, einen Einfüllbereich und ein Förderband. Dabei dient der Vorkammerbereich mit einer oder mehreren Vorkammern zum Aufnehmen und Zuführen des einzufüllenden Katalysatormaterials. Der Einfüllbereich weist zumindest einen Auslass zum gerichteten Einleiten des Katalysatormaterials in eine oberseitige Öffnung eines zu befüllenden Katalysatorrohres auf. Das zwischen dem Vorkammerbereich und dem Einfüllbereich angeordnete Förderband dient dem Transport des Katalysatormaterials von dem Vorkammerbreich zu dem Einfüllbereich, wobei der Transport typischerweise gleichmäßig erfolgt.

Des Weiteren weist die Bandfördermaschine an einem zu dem zu befüllenden Katalysatorrohr weisenden Ende des Auslasses einen Einführabschnitt auf, der durch die Standebene der Bandfördermaschine hindurchragt, die durch den unteren Abschluss des Fahrgestells definiert ist. Mithin ragt der Einführabschnitt während des Befüllens des Katalysatorrohres mit einer bestimmten Höhe in das Katalysatorrohr hinein. Durch den Überlapp zwischen Einführabschnitt und Katalysatorrohr wird eine lose Verbindung zwischen Auslass der Bandfördermaschine und Katalysatorrohr bereitgestellt.

Insgesamt ist durch die Bandfördermaschine ausgehend von dem Vorkammerbereich über das Förderband bis hin zum Einfüllbereich mit seinem Auslass, respektive Einführabschnitt, eine Wegsamkeit bereitgestellt, entlang der einzufüllendes Katalysatormaterial zum zu befüllenden Katalysatorrohr transportiert wird.

Probleme beim Betrieb treten dann auf, wenn es zu Verklumpungen des Katalysatormaterials entlang der Förderstrecke oder beim Einfüllen in die Reaktorrohre kommt. Eine daraus resultierende ungleichmäßige Befüllung der Katalysatorrohre wird dann vielfach nicht sofort erkannt, sodass voneinander abweichende Befüllungen in den Katalysatorrohen auftreten können.

Im Detail kann das vorstehend aufgezeigte allgemeine Problem in drei Detailprobleme aufgeteilt werden:
Dadurch, dass während des Befüllens der Einführabschnitt in das Katalysatorrohr und damit durch die Standebene hindurchragt, ist das Verfahren der Bandfördermaschine auf dem Fahrgestell problematisch. Hierbei wird der Einfüllabschnitt über den Rohrspiegel gezogen. Je nach Ausgestaltung des Einführabschnittes kann hierdurch eine Beschädigung des Rohrspiegels erfolgen oder, was häufiger passiert, der Einführabschnitt selbst wird beschädigt, etwa an seinem Ende so verformt werden, sodass ein reibungsarmes Einfüllen des Katalysatormaterials in das Katalysatorrohr verhindert wird.

Ein weiteres Problem besteht in einer notwendigen Anpassbarkeit des Abstandes zweier benachbarter Einführabschnitte, welche Anforderung sich ergibt, wenn die Bandfördermaschine auf verschiedenen Rohrspiegeln eingesetzt werden soll. Diese Abstandsänderung wird üblicherweise durch plastisch deformierbare Einfüllrohre realisiert, die etwa als Spiralrohre, die durch eine entsprechende Verformung ihre veränderte Form behalten, ausgebildet sind. Die Einfüllrohre werden so auf den gewünschten Katalysatorrohrabstand eingestellt. So sind bei der Nutzung von mehreren Einfüllrohren ein oder mehrere Einfüllrohre S-förmig verkröpft, während andere dies nicht zwingend sind. Dies resultiert in einem unterschiedlichen Fließwiderstand in den einzelnen Einfüllrohren und der Gefahr des Verklumpens in den Einfüllrohren, sodass das Förderband nicht mit voller Leistung gefahren werden kann.

Ein drittes Problem besteht darin, dass die Einfüllrohre üblicherweise den engsten Querschnitt der Bandfördermaschine bilden, durch den das Katalysatormaterial hindurchgeleitet wird. Auch aus diesem Grunde sind hier immer wieder Verklumpungen festzustellen.

Der Erfindung liegt die Aufgabe zugrunde, eine Bandfördermaschine zum Einfüllen von Katalysatormaterial in Katalysatorrohre eines industriellen Reaktors anzugeben, deren Betrieb vereinfacht ist und zu einer reproduzierbar gleichmäßigen Befüllung führt, bei der ein oder mehrere vorstehend genannte Detailprobleme gelöst sind.

Das erstgenannte Detailproblem wird gelöst durch eine eingangs genannte, gattungsgemäße Bandfördermaschine zum Einfüllen von Katalysatormaterial in ein Katalysatorrohr eines industriellen Reaktors, umfassend
- ein Fahrgestell zum Verfahren der Bandfördermaschine,
- zumindest einen Vorkammerbereich mit zumindest einer Vorkammer zum Aufnehmen von einzufüllendem Katalysatormaterial,
- einen Einfüllbereich mit zumindest einem Auslass zum Anschließen an eine oberseitige Öffnung eines zu befüllenden Katalysatorrohres und
- ein Förderband zum Fördern von Katalysatormaterial von dem Vorkammerbereich zu dem Einfüllbereich,

wobei das zu dem zu befüllenden Katalysatorrohr weisende untere Ende des Auslasses mit einem Einführabschnitt eine bestimmte Höhe durch eine durch den unteren Abschluss des Fahrgestells gebildete Standebene während des Befüllens des Katalysatorrohres hindurchragt, sodass der Einführabschnitt beim Befüllen in das Katalysatorrohr hineinragt, wobei der Einfüllbereich gegenüber der Standebene höhenverstellbar gelagert ist, sodass während eines Verfahrens der Bandfördermaschine auf der Standebene der Einführabschnitt mit seinem unteren Ende des Auslasses oberhalb der Standebene angeordnet ist. Diese Variante wird nachstehend als erste Variante angesprochen.

Das zweitgenannte Detailproblem wird gelöst durch eine eingangs genannte, gattungsgemäße Bandfördermaschine zum Einfüllen von Katalysatormaterial in ein Katalysatorrohr eines industriellen Reaktors, umfassend
- zumindest einen Vorkammerbereich mit zumindest einer Vorkammer zum Aufnehmen von einzufüllendem Katalysatormaterial,
- einen Einfüllbereich mit zumindest zwei Einfüllrohren, jeweils mündend in jeweils einer oberseitigen Öffnung eines zu befüllenden Katalysatorrohres,
- ein Förderband zum Fördern von Katalysatormaterial von dem Vorkammerbereich zu dem Einfüllbereich und
- zumindest zwei Leitabschnitte zum seitlichen Führen von Katalysatormaterial auf dem Förderband quer zur Förderrichtung,
wobei an jedem Leitabschnitt jeweils ein Einfüllrohr des Einfüllbereichs angeschlossenen ist, sodass ausgehend von dem Vorkammerbereich zu dem zu befüllenden Katalysatorrohr eine Wegsamkeit gegeben ist, wobei die Leitabschnitte in ihrem Abstand quer zur Förderrichtung zueinander einstellbar gehalten sind, sodass durch eine Änderung des Abstandes der Leitabschnitte auch der Abstand der Einfüllrohre entsprechend geändert wird. Diese Variante wird nachstehend als zweite Variante angesprochen.

Das drittgenannte Detailproblem wird gelöst durch eine eingangs genannte, gattungsgemäße Bandfördermaschine zum Einfüllen von Katalysatormaterial in ein Katalysatorrohr eines industriellen Reaktors, umfassend
- ein Fahrgestell zum Verfahren der Bandfördermaschine,
- zumindest einen Vorkammerbereich mit zumindest einer Vorkammer zum Aufnehmen von einzufüllendem Katalysatormaterials,
- einen Einfüllbereich mit zumindest einem Einfüllrohr, das einen Auslass zum Anschließen an eine oberseitige Öffnung eines zu befüllenden Katalysatorrohres aufweist, und
- ein Förderband zum Fördern von Katalysatormaterial von dem Vorkammerbereich zu dem Einfüllbereich,
wobei das Einfüllrohr jedenfalls über den Großteil seiner Erstreckung trichterförmig ausgebildet ist und/oder dass das Einfüllrohr aus einem flexiblen, elastisch deformierbaren Material gefertigt ist, sodass das Einfüllrohr in seinem Querschnitt elastisch deformierbar ist. Diese Variante wird nachstehend als dritte Variante angesprochen.

Vorteilhafte Ausgestaltungen ergeben sich aus der Beschreibung und den Unteransprüchen.

Gemäß der ersten Variante ist der Einfüllbereich gegenüber der Standebene höhenverstellbar gelagert, sodass während des Verfahrens der Bandfördermaschine der Einführabschnitt mit seinem unteren Ende oberhalb der Standebene angeordnet ist. Mithin erfolgt das Herausziehen des Einfüllbereichs aus dem zu befüllenden Katalysatorrohr beim Verfahren und neu positionieren der Bandfördermaschine nicht durch ein bloßes Rücksetzen der Bandfördermaschine. Stattdessen wird zunächst der Einfüllbereich kontrolliert über die Höhenverstellung vertikal angehoben, bevorzugt, ohne dass es zu einer Wandungsberührung auf der Innenseite des Katalysatorrohres kommt. Vor diesem Hintergrund ist ferner bevorzugt vorgesehen, den Einfüllbereich parallel zur Standebene gegenüber dem Fahrgestell höhenverstellbar einzurichten. Dies verhindert auch ein Verkanten des Einfüllabschnitts in dem Katalysatorrohr. Erst wenn der Einführabschnitt freihängend eine hinreichende Bodenfreiheit, das heißt einen ausreichenden Sicherheitsabstand zwischen seinem unteren Ende und der Standebene, aufweist, erfolgt eine horizontale Fahrbewegung der Bandfördermaschine.

So wird verhindert, dass der Einführabschnitt unkontrolliert über den Rand eines Katalysatorrohres gezogen wird und es im Verlauf der weiteren Verfahrbewegung zu einem Bodenkontakt des Einführabschnittes mit der Standebene kommt. Auf diese Weise wird verhindert, dass das untere Ende des Einführabschnittes durch die Standebene, respektive durch den Rohrspiegel beschädigt wird.

Bevorzugt ist für ein erstes Ausführungsbeispiel der Einfüllbereich gegenüber dem Fahrgestell der Bandfördermaschine höhenverstellbar gelagert. Es ist somit eine Schnittstelle zwischen Einfüllbereich und Fahrgestell vorgesehen; das Fahrgestell selbst kann bezüglich seiner sich bewegenden Elemente, etwa Rollen, in sich geschlossen ausgelegt sein. Dies erhöht die Betriebssicherheit und vereinfacht die technische Umsetzung. Als Fahrgestellt wird üblicherweise ein Rahmen, an dem ein oder mehrere zum Verfahren der Bandfördermaschine geeignete Rollen angeschlossen sind, bereitgestellt.

Besonders vorteilhaft ist eine Ausführung, in der der Vorkammerbereich, das Förderband und der Einfüllbereich und ggf. weitere zum Betrieb notwendigen Komponenten auf einem gemeinsamen Fördergestell aufgebaut sind. Damit ist es möglich, das Fördergestell als Ganzes gegenüber dem Fahrgestell anhebbar zu gestalten. Es ist somit eine Schnittstelle zwischen einem Unterteil - dem Fahrgestell - und einem Oberteil - dem Fördergestell - bereitgestellt. So kann auch das Fördergestell einfach von dem Fahrgestell demontiert werden, sodass die Bandfördermaschine einfach in zwei Teile zerlegbar ist. Dies vereinfacht den Transport insbesondere in beengte Räume und aus diesen heraus.

Für die Ausgestaltung der Höhenverstellbarkeit sind grundsätzlich unterschiedliche Aktorausführungen möglich. Bevorzugt wird die Höhenverstellbarkeit durch eine Exzenterhebelanordnung und/oder eine Zylinderanordnung realisiert.

Ist eine Exzenterhebelanordnung vorgesehen, ist eine händische Höhenverstellung ermöglicht. Diese ist robust einsetzbar und erlaubt eine schnelle Reaktionszeit. So kann der Hebel der Exzenterhebelanordnung auch als Verfahrgriff der Bandfördermaschine genutzt werden: Wird die Bandfördermaschine an eine neue Position gezogen, wird der Hebel betätigt, welcher zunächst den Einfüllbereich anhebt und, sobald der Einfüllbereich die vorgesehene Höhe erreicht hat, schlägt die Exzenterhebelanordnung an einen Anschlag an, sodass dann die Bandfördermaschine auf der Standebene verfahrbar ist. Üblicherweise ist die Exzenterscheibe an dem Fahrgestell gelagert.

Ist eine Zylinderanordnung vorgesehen, kann diese pneumatisch oder mechanisch ausgebildet sein. Es können etwa zwei Zylinder in Querrichtung zur Förderrichtung des Förderbandes gegenüberliegend angeordnet sein. Ausgerichtet sind diese bezüglich der Förderrichtung üblicherweise mit Blick auf den Schwerpunkt der zu hebenden Last, etwa dem Fördergestell.

Zusätzlich ist es vorteilhaft, die Höhenverstellung mittels einer Steuerung zu automatisieren, sodass ohne einen Nutzereingriff die Bandfördermaschine vom Befüllbetrieb mittels eines jedenfalls im Wesentlichen lotrechten Abzugs der Einführabschnitte aus den Katalysatorrohren gefolgt von einer Fahrbewegung vom Katalysatorrohr abgenommen werden kann. So kann auch eine weitergehende Automatisierung vorgesehen sein, etwa eine solche, die automatisch den Abschluss eines Befüllvorganges erkennt und automatisch den Einfüllbereich anschließend anhebt.

Zur Sicherung der Betriebsstellung beim Befüllen weist der höhenverstellbare Einfüllbereich bzw. das Fördergestell bevorzugt einen oder mehrere Stützfüße auf, die während des Befüllens dazu dienen, den höhenverstellbaren Teil der Bandfördermaschine auf der Standebene abzustützen und die Lage der Bandfördermaschine in einer vorgegebenen Sollposition zu sichern. Zum Verfahren der Bandfördermaschine ist der bzw. sind die Stützfüße gegenüber der Standebene durch die Verbindung zum Einfüllbereich bzw. dem Fördergestell nach oben versetzt.

Ist vorgesehen, dass der Einfüllbereich bzw. das Fördergestell gegenüber dem ein Fahrgestell höhenverstellbar ist, kann auch vorgesehen sein, dass das Fahrgestell von der Standebene angehoben wird, sobald der bzw. die Stützfüße den höhenverstellbaren Teil der Bandmaschine gegenüber der Standebene abstützen. Der untere Abschluss des Fahrgestells, etwa eine oder mehrere Rollen, ist dann zumindest abschnittsweise gegenüber der Standebene angehoben. So wird ein ungewolltes Verfahren der Bandfördermaschine während des Befüllens, etwa auch aufgrund induzierter Vibrationen, vermieden.

Die Stützfüße weisen bevorzugt nach unten weisende Abschlüsse auf, die wesentlich größer sind als die Durchmesser der Katalysatorrohre, damit ein sicheres Abstützen möglich ist.

Die zweite Variante geht von der eingangs beschriebenen, gattungsgemäßen Bandfördermaschine aus.

Ferner ist vorgesehen, dass am Förderband zum seitlichen Führen des Katalysatormaterials zumindest zwei Leitabschnitte vorgesehen sind, die dem seitlichen Führen des Katalysatormaterials auf dem Förderband dienen. Mithin begrenzen die Leitabschnitte die Bewegung des Katalysatormaterials quer zur Förderrichtung. An jedem der Leitabschnitte ist jeweils eines der Einfüllrohre des Einfüllbereiches angeschlossen, sodass sich eine Wegsamkeit zu dem zu befüllenden Katalysatorrohr ausgehend vom Vorkammerbereich mit einer seitlichen Führung bietet.

Zur Lösung des eingangs genannten zweiten Problemkreises ist vorgesehen, dass die Leitabschnitte so gehalten sind, dass deren Relativabstand quer zur Förderrichtung einstellbar sind. Die Einstellbarkeit kann etwa durch eine lösbare Fixierung der Leitabschnitte vorgesehen sein. Aufgrund der Verbindung zwischen Leitabschnitt und Einfüllrohr folgt daraus, dass auch für die Einfüllrohre eine Einstellbarkeit der Relativlage quer zur Förderrichtung gegeben ist.

Dies resultiert in einer verbesserten Zentrierbarkeit für die Einfüllung von Katalysatormaterial in eine Katalysatorrohranordnung, da der Einführabschnitt möglichst nah an die Längsachse des jeweiligen Katalysatorrohres herangeführt werden kann. Hierdurch werden die Bedingungen für das gravitatorische Einrieseln durch die Einfüllrohre über die gesamte Katalysatorrohranordnung vergleichmäßigt: Die Einfüllrohre können allesamt lotrecht ausgerichtet sein und müssen nicht für eine Abstandsadaption verkröpft werden. Der Befülldruck in den Rohren ist auf diese Weise vergleichmäßigt und die Bandfördermaschine kann mit einer höheren Leistung (Katalysatormaterial je Zeiteinheit) betrieben werden. Insgesamt ist der Fließwiderstand innerhalb der Einführrohre verringert.

Für die seitliche Begrenzung des Leitabschnittes ist bevorzugt vorgesehen, zwei miteinander quer zur Förderrichtung verbundene Wände vorzusehen. Durch das Verbinden kann ein vordefinierter Abstand der Wände vorgesehen sein. Zwischen diesen beiden Wänden ist die für das Katalysatormaterial bestimmte Wegsamkeit vorgesehen; die Wegsamkeit wird von den Wänden eingefasst.

Bevorzugt ist vorgesehen, die Leitabschnitte an zumindest zwei voneinander beabstandeten Anschlusspunkten an zumindest zwei Querstreben der Bandfördermaschine, bevorzugt des Fördergestells, zu fixieren, die sich quer zur Förderrichtung erstrecken. Durch die Erstreckung der Querstreben quer zur Förderrichtung können die Leitabschnitte entlang der Querstreben geführt verschoben werden, sodass die gewünschte Abstandseinstellung der Einfüllrohre erfolgt. Ein Fixieren an zumindest einer Querstrebe kann etwa durch einen Reibschluss mit einer Schraubverbindung erfolgen.

Zur Abstützung der Leitabschnitte an zumindest einer Querstrebe in Förderrichtung weist zumindest ein Leitabschnitt bevorzugt mindestens ein Formschlusselement auf. Das Formschlusselement wirkt somit in Förderrichtung und bildet einen formschlüssigen Anschlag. Das Formschlusselement kann etwa als Hakengeometrie ausgeformt sein; der Leitabschnitt selbst kann durch seine Kontur, etwa die Stirnseiten der Wände, die den Leitabschnitt bilden, das Hakenelement bereitstellen.

Bevorzugt ist eine integrale Ausführung von zumindest Teilen des Vorkammerbereichs und des sich daran anschließenden Leitabschnittes vorgesehen. Hierzu ist eine dem jeweiligen Leitabschnitt zugewiesene Vorkammer des Vorkammerbereichs seitlich durch Wände begrenzt, die der Erstreckung der seitlichen Begrenzung der Leitabschnitte folgen. Mithin sind die Wände der Vorkammer und die Wände der ausgebildeten seitlichen Begrenzungen der Leitabschnitte einstückig angelegt. Durch diese Maßnahme liegt eine durchgängige Wegsamkeit von der Vorkammer zu dem sich daran anschließenden Leitabschnitt vor, die bevorzugt einen gleichbleibenden Wandungsabstand quer zur Förderrichtung aufweist. Damit stehen die Kraftvektoren des aufgrund der Schwerkraftwirkung in der Vorkammer nachrieselnden Materials im Wesentlichen senkrecht zur durch die Bewegung des Förderbands bestimmten Förderrichtung. Als Folge nimmt die Verklumpungsneigung beim Materialtransport ab.

Ferner ist eine Ausgestaltung bevorzugt, in der die Bandfördermaschine einen großen Querschnitt zu deren Befüllung bereitstellt. Hierzu ist vorgesehen, eine Aufsatztrichteranordnung zu verwenden, die oberhalb der zumindest einen Vorkammer, typischerweise der Vielzahl der Vorkammern des Vorkammerbereich positioniert ist. Typicherweise ist jeder Vorkammer ein Aufsatztrichter zugeordnet. Die jeweiligen Trichter der Aufsatztrichteranordnung und die diesen jeweils zugeordneten Vorkammern im Anschlussbereich gehen so ineinander über, dass ein Austritt von Katalysatormaterial verhindert wird.

Der jeweilige Aufsatztrichter kann so angelegt sein, dass die Verjüngung quer zur Förderrichtung verläuft, sodass der sich zwischen benachbarten Vorkammern eingestellte Abstand überbrückt wird.

Zur Vergleichmäßigung des Rieselns des Katalysatormaterials wird diese Querverjüngung des Trichters bevorzugt nicht in die anschließende Vorkammer fortgesetzt. Stattdessen weist jede der Vorkammern einen gleichbleibenden Wandungsabstand quer zur Förderrichtung in Kombination mit einer verjüngenden Gestaltung in Förderrichtung auf.

Die dritte Variante geht ebenfalls von einer gattungsgemäßen Bandfördermaschine mit einem Einfüllrohr aus.

Erfindungsgemäß ist eine Bandfördermaschine gemäß einer dritten Variante so ausgestaltet, dass zumindest ein Einfüllrohr jedenfalls über den Großteil seiner Erstreckung trichterförmig ausgebildet. Diese Maßnahme verringert ein Verklumpen beim Einbringen von Katalysatormaterial in die Katalysatorrohre, da durch die Nutzung der Erstreckung des Einfüllrohres zum Ausbilden eines Trichters ein kleiner Trichterwinkel vorgesehen sein kann. In einem solchen Trichter ist eine Materialverklumpung regelmäßig seltener zu beobachten. Zusätzlich ist der Trichter jedenfalls im Wesentlichen lotrecht ausgerichtet, sodass das einrieselnde Katalysatormaterial durch die Schwerkraft beschleunigt wird und so durch die eigene Geschwindigkeit etwaige Brückenbildungen zerschlägt.

Bevorzugt ist ein Wandungswinkel von höchstens 50 Grad und besonders bevorzugt höchstens 25 Grad für einen klumpungsfreien Eintritt des Katalysatormaterials in das Katalysatorrohr vorgesehen. Dadurch, dass das Einfüllrohr jedenfalls über den Großteil seiner Erstreckung trichterförmig ausgebildet ist, kann auch ein Wandungswinkel von 10 Grad oder 5 Grad oder noch kleiner erreicht werden, wodurch sich die Vorteile weiter vergrößern. Dabei wird der Wandungswinkel als der Winkel zwischen einer gemittelten Tangente an das Innenprofil eines zentral angelegten Längsschnitts des Einfüllrohrs und der Senkrechten verstanden.

Ergänzend oder alternativ zu dieser dritten Variante ist das Einfüllrohr aus einem flexiblen Material ausgebildet, dessen Querschnitt elastisch deformierbar ist. Aufgrund der elastischen Deformierbarkeit reichen die beim Anlagenbetrieb ohnehin vorhandenen Vibrationen aus, dass sich wandungsnahe Materialbrücken unmittelbar auflösen. Auch das Abstützen der Materialbrücke an den Wänden wird auf diese Weise erschwert, da unter Krafteinwirkung das Einfüllrohr schlichtweg verformt. Zudem kann ein rascher, das Einfüllrohr verformender Benutzereingriff von außen erfolgen, etwa wenn eine sich anbahnende größere Verklumpung durch ein Ausbeulen des Einfüllrohrs sichtbar wird. Bevorzugt ist als flexibles Material für das Einfüllrohr ein Gewebeschlauch vorgesehen, der die geforderte Flexibilität liefert.

Zusätzlich kann die Wirkung der erfindungsgemäßen Gestaltung dadurch verbessert werden, dass die Innenwandung des Einfüllrohres möglichst glatt angelegt ist. Wird für das Einfüllrohr ein Gewebeschlauch verwendet, ist es daher vorteilhaft, diesen mit einer Innenbeschichtung zu versehen.

Alternativ kann das Einfüllrohr aus einer reißfesten Kunststoffplane hergestellt sein. Derartige Kunststoffplanen sind zur Verkleidung von Kraftfahrzeugtrailern bekannt. Mit einer reißfesten Kunststoffplane ist die geforderte Kombination aus Glattheit der Innenwandung und deren Flexibilität in besonderem Maße auch unter wirtschaftlichen Gesichtspunkten gegeben.

In einer weiteren Ausgestaltung ist vorgesehen, dass die Bandfördermaschine über einen Seilwindenmechanismus verfügt. Dieser Seilwindenmechanismus ist dazu eingerichtet, dass in die Einführabschnitte, respektive in die Katalysatorrohre, ein Seil, etwa ein Drahtseil geführt wird. Dieses dient der Verkleinerung des Fallquerschnittes eines einzelnen Katalysatormaterialpartikels in das Katalysatorrohr, indem dieses beim Herabfallen in das Katalysatorrohr einerseits an der Katalysatorrohrwand und andererseits an dem Seil anschlägt und hierdurch abgebremst wird.

Während des Befüllens des Katalysatorrohres besteht die Notwendigkeit, das Seil sukzessive entsprechend des Füllstandes des in dem Katalysatorrohr aus dem Katalysatorrohr hinauszuziehen, um zu verhindern, dass das eingefüllte Katalysatormaterial das Seil in dem Katalysatorrohr verankert. Hierfür verfügt der Seilwindenmechanismus über einen Elektromotor, etwa einen Servomotor sowie eine oberhalb der Einführabschnitte angeordnete Umlenkung, mit der das Seil zu einer Seilwinde geführt wird oder die Seilwinde direkt, die mittels des Antriebs angetrieben wird. Von Besonderheit ist, dass beim Vorsehen von mehreren Einfüllrohren die das jeweilige, einem Einfüllrohr zugeordneten Seil aufwickelnde Seilwindenabschnitte synchron angetrieben werden, sodass alle Seile gleichmäßig und gleichzeitig aus den jeweiligen Katalysatorrohren herausgezogen werden. Durch die elektrische Ansteuerung ist eine genaue Steuerung des Auszugverhaltens des Seiles möglich; insbesondere ist diese an die Geschwindigkeit des Förderbandes angepasst. So ist insbesondere denkbar, dass der Antrieb des Förderbandes und derjenige des Seilwindenmechanismus derselbe sind.

Für weitere mögliche Ausführungsbeispiele sind die Merkmale der verschiedenen Varianten der Erfindung mit den Merkmalen einer oder beider anderen beschriebenen Varianten kombinierbar.

Nachfolgend sind beispielhafte Ausgestaltungsvarianten der Erfindung im Zusammenhang mit Figurendarstellungen erläutert. Diese zeigen, jeweils schematisch, folgendes:
- **Fig. 1:**: Figur 1 zeigt ein erstes Ausführungsbeispiel der erfindungsgemäßen Bandfördermaschine mit den Merkmalen der Varianten 1 - 3 in perspektivischer Ansicht.
- **Fig. 2:**: Figur 2 zeigt das erste Ausführungsbeispiel aus Figur 1 als Teilschnitt.
- **Fig. 3:**: Figur 3 zeigt eine Teilkomponente für ein zweites Ausführungsbeispiel der erfindungsgemäßen Bandfördermaschine.
- **Fig. 4:**: Figur 4 zeigt das in Figur 3 gezeigte Ausführungsbeispiel mit abgesenktem Einfüllbereich.

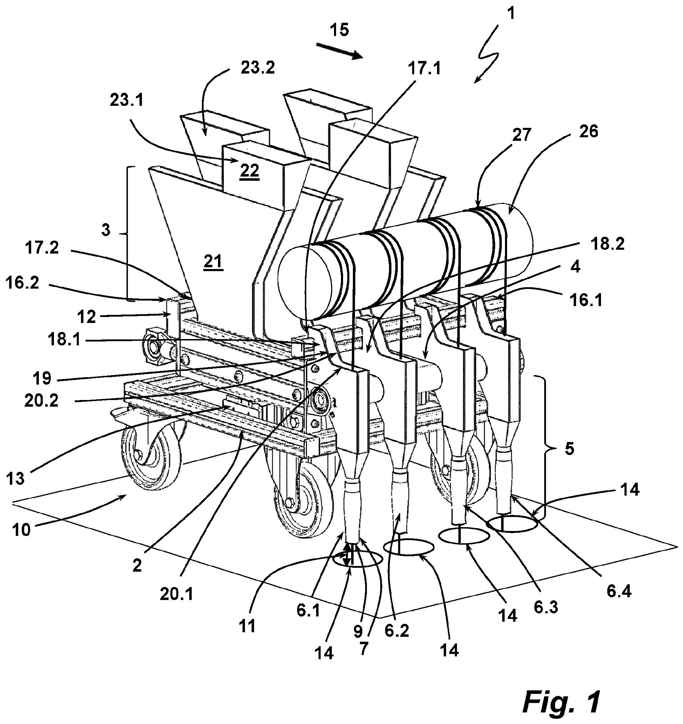

Figur 1 stellt ein schematisch vereinfachtes Ausführungsbeispiel einer erfindungsgemäßen Bandfördermaschine 1 dar, für die die Merkmale der Varianten 1 - 3 kombiniert sind. Die auf einem Fahrgestell 2 verfahrbare Bandfördermaschine 1 umfasst einen Vorkammerbereich 3, der für das Aufnehmen eines einzufüllenden Katalysatormaterials dient. Von diesem aus wird mittels eines Förderbandes 4 das einzufüllende Katalysatormaterial zu einem Einfüllbereich 5 transportiert. Ersichtlich ist, dass am Einfüllbereich 5 eine Fallstrecke vorliegt, die in dem dargestellten Beispiel eine Anordnung aus vier Einfüllrohren 6.1,..., 6.4 umfasst. Die Einfüllrohre 6.1,..., 6.4 sind identisch aufgebaut; nachstehend und in den Figuren wird sich der Einfachheit halber nur auf das erste Einfüllrohr 6.1 bezogen, die weiteren Einfüllrohre 6.2,..., 6.4 weisen diese Merkmale ebenso auf.

Jedes der Einfüllrohre 6.1,..., 6.4 weist einen Einführabschnitt 7 mit einem zu dem zu befüllenden Katalysatorrohr 8 weisenden unteren Ende auf, an dem ein Auslass 9 vorgesehen ist.

In der in Figur 1 dargestellten Verfahrstellung der Bandfördermaschine 1 befindet sich der Einfüllbereich 5 in einer angehobenen Stellung, sodass zwischen dem unteren Ende des Auslasses 9 und einer Standebene 10, auf der die Bandfördermaschine 1 steht, ein Vertikalabstand 11 vorliegt; auf diese Weise besteht zwischen unterem Ende des Auslasses 9 und der Standebene 10 keine Bodenberührung. Die Bandfördermaschine 1 wird horizontal zur Standebene 10 bewegt, um diese für das Befüllen über eine Anordnung von Katalysatorrohren 8 eines im Einzelnen nicht dargestellten industriellen Reaktors positionieren zu können.

Nach der Positionierung über den Katalysatorrohren 8 wird die Betriebsstellung (nicht dargestellt) durch ein Absenken des Einfüllbereichs 5 erreicht, sodass der Auslasses 9 mit seinem am unteren Ende angeordneten Einfüllabschnitt 7 durch die Standebene 10, dem Rohrspiegel, hindurchragt und mit dieser in das jeweilige Katalysatorrohr 8 hineinreicht.

Zur Realisierung der Höhenverstellbarkeit sind der Vorkammerbereich 3, das Förderband 4 und der Einfüllbereich 5 auf einem gemeinsamen Fördergestell 12 zu einer Baueinheit vereinigt. Das Fördergestell 12 mit den darauf befindlichen Komponenten kann in seiner Höhe gegenüber dem Fahrgestell 2 eingestellt werden. Hierzu dient eine Zylinderanordnung 13 als aktorisches Element, die so ausgebildet ist, dass eine Parallelstellung zwischen dem Fahrgestell 2 und dem Fördergestell 12 im Verlauf der Höhenverstellung beibehalten wird. Entsprechend bleiben die unteren Enden der Auslässe 9 an den Einfüllrohren 6.1,..., 6.4 untereinander auf gleicher Höhe.

Der Höhenverstelleinrichtung ist eine im Einzelnen nicht dargestellte Steuerung zugeordnet, die es ermöglicht, die Niveauanpassung des Einfüllbereichs 5 in die automatisierte Ablaufsteuerung des Befüllens zu integrieren.

Nach dem Abschluss des Befüllens der zu befüllenden Katalysatorrohre 8 erfolgt zunächst ein Anheben der jeweiligen Einfüllrohre 6.1,..., 6.4 mittels der Zylinderanordnung 13, bis diese eine geforderten Vertikalabstand 11 zur Standebene 10 aufweisen. Durch eine solchermaßen vertikal ausgeführte Abzugsbewegung wird sichergestellt, dass die Einführabschnitte 7 nahezu ohne Wandberührung, jedenfalls ohne Einwirkung einer durch die jeweilige Wand des Katalysatorrohres 8 oder durch die jeweilige Kante der Öffnung 14 des Katalysatorrohres 8 ausgeübte Querkraft auf den jeweiligen Einführabschnitt 7, aus dem jeweiligen Katalysatorrohr 8 abgezogen wird, ohne dass der jeweilige Einführabschnitt 7 beschädigt wird. Zusätzlich wird ein Verschmutzen der Auslässe 9 bei der anschließenden Fahrbewegung vermieden. Damit wird das Risiko von Materialverklumpungen für nachfolgende Befülloperationen verringert.

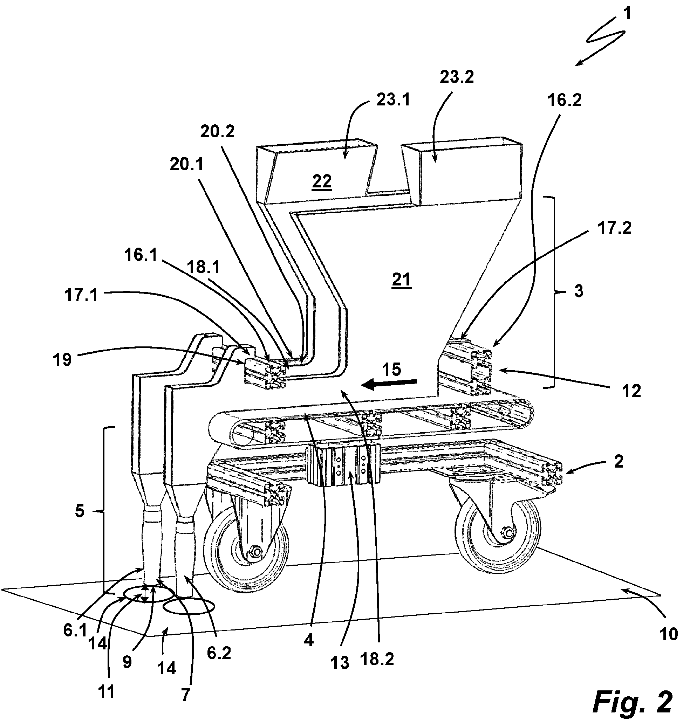

Damit die Bandfördermaschine 1 für verschiedene Rohrspiegel einsetzbar ist, wobei sich die Rohrspiegel dadurch unterscheiden, dass der Abstand der Katalysatorrohre 8 unterschiedlich ist, ist vorgesehen, die Einfüllrohre 6.1,..., 6.4 in ihrem Abstand quer zur Förderrichtung 15 einstellbar am Fördergestell 12 zu halten. Dies wird aus der Schnittdarstellung in Figur 2 ersichtlich. Gezeigt ist eine Anordnung aus zwei Querstreben, 16.1, 16.2, die dem Fördergestell 12 zugeordnet sind. An zueinander in Förderrichtung 15 beabstandeten Anschlusspunkten 17.1, 17.2 sind daran einteilig mit den jeweiligen Einfüllrohren 6.1,..., 6.4 ausgeführte Leitabschnitte 18.1, 18.2 querbeweglich befestigt. Zu diesem Zweck ist ein exemplarisch in Figur 1 bezeichnetes Formschlusselement 19 vorgesehen, das es ermöglicht, die Leitabschnitte 18.1, 18.2 in ihrem Abstand quer zur Förderrichtung 15 zueinander einstellbar zu halten. Die Förderrichtung 15 ist durch die Transportrichtung auf dem Förderband 4 definiert.

Für den Transport des Katalysatormaterials vom Vorkammerbereich 3 bis zum Einfüllbereich 5 ist vorgesehen, eine freie Wegsamkeit zur Verfügung zu stellen, deren seitliche Begrenzungen so angelegt sind, dass möglichst geringe, ggf. kompaktierend wirkende Querkräfte auftreten. Damit wird das Risiko eines entlang der Förderstrecke auftretenden Verklumpens des Katalysatormaterials weiter verringert. Für diesen Zweck ist vorgesehen, seitliche Begrenzungen des Leitabschnitts 18.1, 18.2 wenigstens in den unmittelbar über dem Förderband 4 befindlichen Bereichen in Form von Wänden 20.1, 20.2 mit einem konstanten Querabstand auszuführen. Diese stellen eine seitliche Begrenzung des Leitabschnitts 18.1, 18.2 dar. Sie sind zur Wahrung des konstanten Querabstands, das heißt des Abstands quer zur Förderrichtung 15, in Bereichen oberhalb des Materialstroms mittels Distanzblechen verbunden.

Die Wände 20.1, 20.2 der Leitabschnitte 18.1, 18.2 setzen sich einstückig in anschließende Wände des Vorkammerbereichs 3 und des Einfüllbereichs 5 fort. Ersichtlich ist, dass der gleichbleibende Querabstand der Wände 20.1, 20.2 bereits für eine Vorkammer 21 im Vorkammerbereich 3 vorliegt. Die in Richtung der Einführöffnung vorgesehene Aufweitung der Vorkammer 21 ist so angelegt, dass die Verjüngung ausschließlich in Förderrichtung 15 und nicht in die Querrichtung erfolgt. In Förderrichtung 15 wird aufgrund der Bewegung des Förderbands 4 im Betrieb am Grund der Vorkammer 21 ständig Material weitertransportiert, so dass sich in diese Richtung ausgerichtete Materialbrücken automatisch auflösen, während in Querrichtung orientierte Materialbrücken aufgrund der gewählten Geometrie der Vorkammer 21 sowie mit den nachfolgenden, in Förderrichtung 15 ausgerichteten Wandungen nicht entstehen können.

Um das Befüllen des Einfüllbereichs 5 zu erleichtern, ist eine Aufsatztrichteranordnung 22 vorgesehen. Deren Trichter 23.1, 23.2 weisen eine Verjüngung auf, die quer zur Förderrichtung 15 verläuft. Zusätzlich sind benachbart zueinander angeordnete Trichter 23.1, 23.2 an den jeweiligen Vorkammern 21 mit einem Versatz in Förderrichtung 15 ausgeführt. Durch diese Maßnahmen weisen die Trichter 23.1, 23.2 eine vergrößerte Querschnittsfläche für das Einfüllen des Katalysatormaterials auf und sie sind einzeln zugänglich. Aufgrund der relativ losen Schüttung des Katalysatormaterials im Bereich der Aufsatztrichteranordnung 22 ist eine Verjüngung der Trichtergestaltung nicht nachteilig, da in diesem Bereich nur eine geringe Wahrscheinlichkeit von Materialverklumpungen besteht.

Auf der Seite des Einfüllbereichs 5 ist eine Ausführung für die Einfüllrohre 6.1,..., 6.4 vorgesehen, die ein möglichst kontinuierliches Rieseln des Katalysatormaterials sicherstellt. Hierzu sind die Einfüllrohre 6,1,..., 6.4 trichterförmig angelegt und sind aus einem flexiblen Material gefertigt, das eine elastische Deformation ihrer jeweiligen Querschnitte ermöglicht. Bereits geringe Vibrationen auf der Bandfördermaschine 1, die beim Betrieb des Förderbandes 4 ohnehin gegeben sind, reichen aus, um Materialbrücken zu den Innenwandungen der Einfüllrohre 6.1,..., 6.4 beim Einfüllen des Katalysatormaterials ständig zu durchbrechen. Unterstützt wird diese Maßnahme durch eine möglichst glatte Ausbildung der Innenwandung der Einfüllrohre 6.1,..., 6.4. Hierzu kann ein beschichteter Gewebeschlauch vorgesehen sein, der diese Eigenschaft in Verbindung mit der geforderten Flexibilität aufweist. Für eine weitere Ausführungsalternative werden die Einfüllrohre 6.1,..., 6.4 aus einer reißfesten Kunststoffplane gebildet.

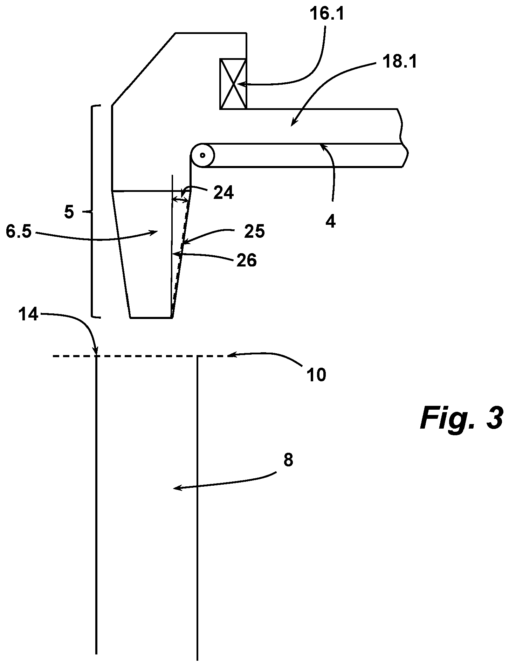

Für ein zweites Ausführungsbeispiel ist vorgesehen, das aus einem flexiblen Material gefertigte Einfüllrohr 6.5 als Trichter mit einem steilen Wandungswinkel 24 auszubilden, wobei das Einfüllrohr 6.5 über seine gesamte Erstreckung verjüngt ausgestaltet ist. Figur 3 zeigt den Einfüllbereich 5 des zweiten Ausführungsbeispiels in einer Seitenansicht. Die weiteren Komponenten der Bandfördermaschine 1 sind im Einzelnen nicht dargestellt und können entsprechend zu Ausführungsbeispiel 1 angelegt sein. Für das zweite Ausführungsbeispiel liegt ein Wandungswinkel 24 vor, der etwa 80 Grad beträgt. Zur Festlegung des Wandungswinkels 24 wird an einen zentral gewählten Längsschnitt des Einfüllrohres 6.5 eine Tangente gelegt. Vorliegend handelt es sich um eine gemittelte Tangente 25, die eine Mittelung über eine Tangentenschar betrachteten des Profilschnitts darstellt. Der steil angelegte Wandungswinkel 24 wird dann durch die gemittelte Tangente 25 und der Vertikalen 26 mit einem orthogonalen Verlauf zur Standebene 10 definiert. Grundsätzlich ist auch eine asymmetrischer Trichterausgestaltung denkbar.

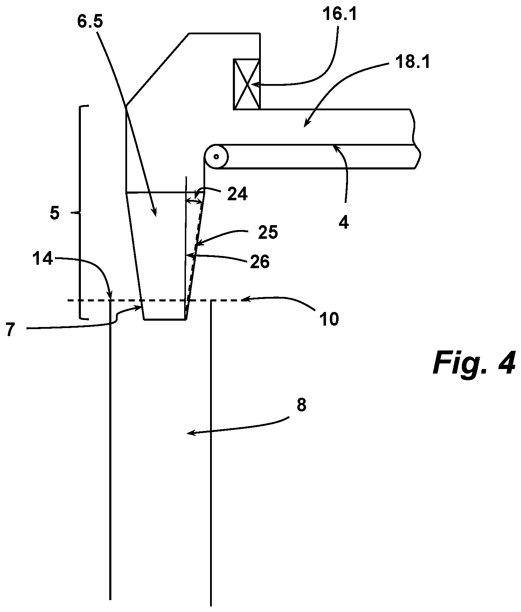

Figur 4 zeigt das zweite Ausführungsbeispiel, jedoch in einer Stellung, in der der Einfüllbereich 5, respektive das Einfüllrohr 6.5 abgesenkt ist und in das Katalysatorrohr 8 mit dem Einführabschnitt 7 des Einfüllrohrs 6.5 hineinragt. Durch den Überlapp zwischen Einführabschnitt 7 und Katalysatorrohr 8 wird das einzufüllende Katalysatormaterial sicher in das Katalysatorrohr 8 eingebracht.

In Figur 1 ist überdies ein Seilwindenmechanismus, aufweisend eine Seilwinde 26 sowie vier daran angeschlossene und von der Seilwinde 26 aufgewickelte Seile 27 (in Figur 1 nur ein Seil mit Bezugszeichen 27 gekennzeichnet) vorgesehen. Die Seilwinde 26 ist über eine nicht näher dargestellte Abstützung gegenüber der übrigen Bandfördermaschine abgestützt und mittels eines Servomotors angetrieben. Die Seile 27 führen durch den Einfüllbereich 5, insbesondere durch die Einfüllrohre 6.1, ...6.5 und Einführabschnitte 7 in das Katalysatorrohr 8 hinein, um die mögliche Bewegung von herabfallendem Katalysatormaterial in dem Katalysatorrohr 8 zu verringern. Hierdurch wird die Fallgeschwindigkeit des Katalysatormaterials reduziert, sodass bei einem Auftreffen des Katalysatormaterials auf dem bereits in das Katalysatormaterial 8 eingebrachten Katalysatormaterials dieses durch den Aufprall nicht beschädigt wird. Während des Befüllens der Katalysatorrohre 8 wird die Seilwinde 26 dahingehend aktiviert, dass die Seile 27 entsprechend des steigenden Füllstandes in dem Katalysatorrohr 8 aufgezogen werden, um ein Verankern des Seils 27 in dem Katalysatorrohr 8 durch das Katalysatormaterial zu verhindern.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, diese umzusetzen, ohne dass diese weiteren Möglichkeiten im Einzelnen näher beschrieben werden müssten.

### Bezugszeichenliste

- 1: Bandfördermaschine
- 2: Fahrgestell
- 3: Vorkammerbereich
- 4: Förderband
- 5: Einfüllbereich
- 6.1,..., 6.5: Einfüllrohr
- 7: Einführabschnitt
- 8: Katalysatorrohr
- 9: Auslass
- 10: Standebene
- 11: Vertikalabstand
- 12: Fördergestell
- 13: Zylinder,anordnung
- 14: Öffnung, des Katalysatorrohres
- 15: Förderrichtung
- 16.1, 16.2: Querstrebe
- 17.1, 17.2: Anschlusspunkt
- 18.1, 18.2: Leitabschnitt
- 19: Formschlusselement
- 20.1, 20.2: Wand
- 21: Vorkammer
- 22: Aufsatztrichteranordnung
- 23.1, 23.2: Trichter
- 24: Wandungswinkel
- 25: gemittelte, Tangente
- 26: Vertikale

## Patentansprüche

1. Bandfördermaschine (1) zum Einfüllen von Katalysatormaterial in ein Katalysatorrohr (8) eines industriellen Reaktors, umfassend
- zumindest einen Vorkammerbereich (3) mit zumindest einer Vorkammer (21) zum Aufnehmen von einzufüllendem Katalysatormaterial,
- einen Einfüllbereich (5) mit zumindest zwei Einfüllrohren (6.1,..., 6.5), jeweils mit einem Auslass (9) mündend in jeweils einer oberseitigen Öffnung (14) eines zu befüllenden Katalysatorrohres,
- ein Förderband (4) zum Fördern von Katalysatormaterial von dem Vorkammerbereich (3) zu dem Einfüllbereich (5) und
- zumindest zwei Leitabschnitte (18.1, 18.2) zum seitlichen Führen von Katalysatormaterial auf dem Förderband (4) quer zur Förderrichtung (15),
wobei an jedem Leitabschnitt (18.1, 18.2) jeweils ein Einfüllrohr (6.1,..., 6.5) des Einfüllbereichs (5) angeschlossenen ist, sodass ausgehend von dem Vorkammerbereich (3) zu dem zu befüllenden Katalysatorrohr (8) eine Wegsamkeit gegeben ist, **dadurch gekennzeichnet, dass** die Leitabschnitte (18.1, 18.2) in ihrem Abstand quer zur Förderrichtung (15) zueinander einstellbar gehalten sind, sodass durch eine Änderung des Abstandes der Leitabschnitte (18.1, 18.2) auch der Abstand der Einfüllrohre (6.1,..., 6.5) entsprechend geändert wird.

2. Bandfördermaschine nach Anspruch 1, **dadurch gekennzeichnet, dass** die seitliche Begrenzung des Leitabschnittes (18.1, 18.2) durch zwei miteinander verbundene Wände (20.1, 20.2) mit konstantem Abstand gebildet ist.

3. Bandfördermaschine nach einem der Ansprüche 1 oder 2, **dadurch gekennzeichnet, dass** die Leitabschnitte (18.1, 18.2) an zumindest zwei voneinander beabstandeten Anschlusspunkten (17.1, 17.2) an zumindest zwei quer zur Förderrichtung (15) ausgerichteten Querstreben (16.1, 16.2) der Bandfördermaschine (1) fixiert sind.

4. Bandfördermaschine nach Anspruch 3, **dadurch gekennzeichnet, dass** zwischen zumindest einer, bevorzugt beiden Querstreben (16.1, 16.2) und Leitabschnitten (18.1, 18.2) ein oder mehrere Distanzbleche vorgesehen sind.

5. Bandfördermaschine nach einem der Ansprüche 1 bis 4, **dadurch gekennzeichnet, dass** die Leitabschnitte (18.1, 18.2) jeweils über zumindest ein Formschlusselement (19) verfügen, mit dem sie in Förderrichtung (15) des Förderbandes (4) etwa an einer Querstrebe (16.1, 16.2) der Bandfördermaschine (1) abgestützt sind.

6. Bandfördermaschine nach einem der Ansprüche 1 bis 5, **dadurch gekennzeichnet, dass** die Vorkammer (21) eines jeden Leitabschnittes (18.1, 18.2) in dem Vorkammerbereich (3) seitlich durch Wände (20.1, 20.2) gebildet wird, die der Erstreckung der seitlichen Begrenzung der Leitabschnitte (18.1, 18.2) folgen und mit den als Wänden (20.1, 20.2) ausgebildeten seitlichen Begrenzungen der Leitabschnitte (18.1, 18.2) einstückig ausgebildet sind.

7. Bandfördermaschine nach einem der Ansprüche 1 bis 6, **dadurch gekennzeichnet, dass** zum Befüllen der Bandfördermaschine (1) diese über eine Aufsatztrichteranordnung (22) verfügt, deren Trichter (23.1, 23.2) in Richtung quer zur Förderrichtung (15) des Förderbandes (4) verjüngt sind und die Vorkammer (21) eines jeden Leitabschnittes (18.1, 18.2) in Förderrichtung (15) verjüngend ausgestaltet ist.

8. Bandfördermaschine nach einem der Ansprüche 1 bis 7, **dadurch gekennzeichnet, dass** die Einfüllrohre (6.1,..., 6.5) einen Auslass (9) zum Anschließen an eine oberseitige Öffnung (14) eines zu befüllenden Katalysatorrohres (8) aufweisen, und die Bandfördermaschine (1) ein Förderband (4) zum Fördern von Katalysatormaterial von dem Vorkammerbereich (3) zu dem Einfüllbereich (5) umfasst, wobei zumindest ein Einfüllrohr (6.5) jedenfalls über den Großteil seiner Erstreckung trichterförmig ausgebildet ist und/oder dass das zumindest eine Einfüllrohr (6.1,..., 6.5) aus einem flexiblen, elastisch deformierbaren Material gefertigt ist, sodass das zumindest eine Einfüllrohr (6.1,..., 6.5) in seinem Querschnitt elastisch deformierbar ist.

9. Bandfördermaschine nach Anspruch 8, **dadurch gekennzeichnet, dass** das zumindest eine Einfüllrohr (6.1,..., 6.5) aus einem Gewebeschlauch und/oder aus einer Kunststoffplane gefertigt ist.

10. Bandfördermaschine nach einem der Ansprüche 8 oder 9, **dadurch gekennzeichnet, dass** das zumindest eine Einfüllrohr (6.5) einen Wandungswinkel (24) von höchstens 50 Grad und insbesondere höchstens 75 Grad aufweist.

11. Bandfördermaschine nach einem der Ansprüche 1 bis 10, **dadurch gekennzeichnet, dass** die Bandfördermaschine (1) ferner umfasst:
- ein Fahrgestell (2) zum Verfahren der Bandfördermaschine (1) und
- ein Förderband (4) zum Fördern von Katalysatormaterial von dem Vorkammerbereich (3) zu dem Einfüllbereich (5),
wobei das zu dem zu befüllenden Katalysatorrohr (8) weisende untere Ende des Auslasses (9) der zumindest zwei Einfüllrohre (6.1,..., 6.5) mit einem Einführabschnitt (7) eine bestimmte Höhe durch eine durch den unteren Abschluss des Fahrgestells (2) gebildete Standebene (10) während des Befüllens des Katalysatorrohres (8) hindurchragt, sodass der Einführabschnitt (7) beim Befüllen in das Katalysatorrohr (8) hineinragt, wobei der Einfüllbereich (5) gegenüber der Standebene (10) höhenverstellbar gelagert ist, sodass während eines Verfahrens der Bandfördermaschine (1) auf der Standebene (10) der Einführabschnitt (7) mit seinem unteren Ende des Auslasses (9) oberhalb der Standebene (10) angeordnet ist.

12. Bandfördermaschine nach Anspruch 11, **dadurch gekennzeichnet, dass** der Einfüllbereich (5) gegenüber dem Fahrgestell (2) höhenverstellbar gelagert ist.

13. Bandfördermaschine nach Anspruch 11 oder 12, **dadurch gekennzeichnet, dass** die zumindest eine Vorkammer (21) des Vorkammerbereichs (3), das Förderband (4) und der Einfüllbereich (5) auf einem Fördergestell (12) aufgebaut sind, welches Fördergestell (12) gegenüber dem Fahrgestell (2) höhenverstellbar gelagert ist.

14. Bandfördermaschine nach Anspruch 13, **dadurch gekennzeichnet, dass** das Fördergestell (12) parallel zur Standebene (10) gegenüber dem Fahrgestell (2) höhenverstellbar ist.

15. Bandfördermaschine nach Anspruch 13 oder 14, **dadurch gekennzeichnet, dass** an den Einfüllbereich bzw. das Fördergestell zumindest ein Stützfuß angeschlossen ist, mit dem der Einfüllbereich bzw. das Fördergestell auf der Standebene während des Befüllens des Katalysatorrohres abgestützt ist.

## Claims

1. A belt conveyor machine (1) for filling catalyst material into a catalyst tube (8) of an industrial reactor, comprising
- at least one pre-chamber region (3) with at least one pre-chamber (21) for receiving catalyst material to be filled,
- a filling region (5) with at least two filling pipes (6.1,..., 6.5), each with an outlet (9) opening into a top opening (14) of a catalyst pipe to be filled,
- a conveyor belt (4) for conveying catalyst material from the pre-chamber region (3) to the filling region (5) and
- at least two guide sections (18.1, 18.2) for laterally guiding catalyst material on the conveyor belt (4) transversely to the conveying direction (15),
wherein a filling pipe (6.1,..., 6.5) of the filling region (5) is connected to each guide section (18.1, 18.2), so that there is a path from the pre-chamber region (3) to the catalyst tube (8) to be filled, **characterized in that** the guide sections (18.1, 18.2) are held adjustable in their distance from one another transversely to the conveying direction (15), so that by changing the distance between the guide sections (18.1, 18.2), the distance between the filling pipes (6.1,..., 6.5) is also changed accordingly.

2. The belt conveyor machine according to claim 1, **characterized in that** the lateral boundary of the guide section (18.1, 18.2) is formed by two interconnected walls (20.1, 20.2) with a constant distance.

3. The belt conveyor machine according to any one of claims 1 or 2, **characterized in that** the guide sections (18.1, 18.2) are fixed to at least two spaced-apart connection points (17.1, 17.2) on at least two cross struts (16.1, 16.2) of the belt conveyor machine (1) aligned transversely to the conveying direction (15).

4. The belt conveyor machine according to claim 3, **characterized in that** one or more spacer plates are provided between at least one, preferably both cross struts (16.1, 16.2) and guide sections (18.1, 18.2).

5. The belt conveyor machine according to one of claims 1 to 4, **characterized in that** the guide sections (18.1, 18.2) each have at least one form-fitting element (19) with which they are supported in the conveying direction (15) of the conveyor belt (4) such as on a cross strut (16.1, 16.2) of the belt conveyor machine (1).

6. The belt conveyor machine according to any one of claims 1 to 5, **characterized in that** the pre-chamber (21) of each guide section (18.1, 18.2) in the pre-chamber region (3) is formed laterally by walls (20.1, 20.2) which follow the extension of the lateral boundaries of the guide sections (18.1, 18.2) and are formed in one piece with the lateral boundaries of the guide sections (18.1, 18.2) designed as walls (20.1, 20.2).

7. The belt conveyor machine according to any one of claims 1 to 6, **characterized in that** for filling the belt conveyor machine (1) it has an attachment hopper arrangement (22), the hoppers (23.1, 23.2) of which are tapered in the direction transverse to the conveying direction (15) of the conveyor belt (4) and the pre-chamber (21) of each guide section (18.1, 18.2) is designed to taper in the conveying direction (15).

8. The belt conveyor machine according to any one of claims 1 to 7, **characterized in that** the filling pipes (6.1,..., 6.5) have an outlet (9) for connection to an upper opening (14) of a catalyst pipe (8) to be filled, and the belt conveyor machine (1) comprises a conveyor belt (4) for conveying catalyst material from the pre-chamber region (3) to the filling region (5), wherein at least one filling pipe (6.5) is funnel-shaped over at least most of its extent and/or that the at least one filling pipe (6.1,..., 6.5) is made of a flexible, elastically deformable material, so that the at least one filling pipe (6.1,..., 6.5) is elastically deformable in its cross-section.

9. The belt conveyor machine according to claim 8, **characterized in that** the at least one filling pipe (6.1,..., 6.5) is made of a fabric hose and/or a plastic tarpaulin.

10. The belt conveyor machine according to any one of claims 8 or 9, **characterized in that** the at least one filling pipe (6.5) has a wall angle (24) of at most 50 degrees and in particular at most 75 degrees.

11. The belt conveyor machine according to any one of claims 1 to 10, **characterized in that** the belt conveyor machine (1) further comprises:
- a chassis (2) for moving the belt conveyor machine (1) and
- a conveyor belt (4) for conveying catalyst material from the pre-chamber region (3) to the filling region (5),
wherein the lower end of the outlet (9) of the at least two filling pipes (6.1,..., 6.5) pointing towards the catalyst pipe (8) to be filled projects with an insertion section (7) to a certain height through a standing plane (10) formed by the lower end of the chassis (2) during filling of the catalyst pipe (8), so that the insertion section (7) projects into the catalyst pipe (8) during filling, wherein the filling region (5) is mounted so as to be height-adjustable relative to the standing plane (10), so that during a movement of the belt conveyor machine (1) on the standing plane (10), the insertion section (7) is arranged with its lower end of the outlet (9) above the standing plane (10).

12. The belt conveyor machine according to claim 11, **characterized in that** the filling region (5) is mounted so as to be height-adjustable relative to the chassis (2).

13. The belt conveyor machine according to claim 11 or 12, **characterized in that** the at least one pre-chamber (21) of the pre-chamber region (3), the conveyor belt (4) and the filling region (5) are constructed on a conveyor frame (12), which conveyor frame (12) is mounted so as to be height-adjustable relative to the chassis (2).

14. The belt conveyor machine according to claim 13, **characterized in that** the conveyor frame (12) is height-adjustable parallel to the standing plane (10) relative to the chassis (2).

15. The belt conveyor machine according to claim 13 or 14, **characterized in that** at least one support foot is connected to the filling region or the conveyor frame, with which the filling region or the conveyor frame is supported on the standing plane during the filling of the catalyst tube.

## Revendications

1. Convoyeur à bande (1) pour l'introduction de matériau catalytique dans un tube de catalyseur (8) d'un réacteur industriel, comprenant
- au moins une zone de préchambre (3) avec au moins une préchambre (21) destinée à recevoir le matériau catalytique à introduire,
- une zone de remplissage (5) avec au moins deux tubes de remplissage (6.1,..., 6.5), chacun avec une sortie (9) débouchant dans une ouverture supérieure (14) d'un tube de catalyseur à remplir,
- une bande transporteuse (4) pour le transport du matériau catalytique de la zone de préchambre (3) à la zone de remplissage (5) et
- au moins deux sections de guidage (18.1, 18.2) pour le guidage latéral du matériau catalytique sur la bande transporteuse (4) transversalement à la direction de transport (15),
dans lequel un tube de remplissage (6.1,..., 6.5) de la zone de remplissage (5) est raccordé à chaque section de guidage (18.1, 18.2), de sorte qu'une continuité de passage est assurée depuis la zone de préchambre (3) jusqu'au tube de catalyseur (8) à remplir, **caractérisé en ce que** les sections de guidage (18.1, 18.2) sont maintenues réglables quant à leur écartement transversalement à la direction de transport (15), de sorte qu'une modification de l'écartement des sections de guidage (18.1, 18.2) entraîne également une modification correspondante de l'écartement des tubes de remplissage (6.1,..., 6.5).

2. Convoyeur à bande selon la revendication 1, **caractérisé en ce que** la limite latérale de la section de guidage (18.1, 18.2) est formée par deux parois (20.1, 20.2) reliées entre elles avec un écartement constant.

3. Convoyeur à bande selon l'une quelconque des revendications 1 ou 2, **caractérisé en ce que** les sections de guidage (18.1, 18.2) sont fixées à au moins deux points de liaison (17.1, 17.2) espacés sur au moins deux traverses (16.1, 16.2) du convoyeur à bande (1) alignées transversalement à la direction de transport (15).

4. Convoyeur à bande selon la revendication 3, **caractérisé en ce qu'**une ou plusieurs plaques d'écartement sont prévues entre au moins une, de préférence les deux traverses (16.1, 16.2) et les sections de guidage (18.1, 18.2).

5. Convoyeur à bande selon l'une quelconque des revendications 1 à 4, **caractérisé en ce que** les sections de guidage (18.1, 18.2) disposent chacune au moins d'un élément de complémentarité de forme (19) au moyen duquel elles sont supportées dans la direction de transport (15) de la bande transporteuse (4) sur une traverse (16.1, 16.2) du convoyeur à bande (1).

6. Convoyeur à bande selon l'une quelconque des revendications 1 à 5, **caractérisé en ce que** la préchambre (21) de chaque section de guidage (18.1, 18.2) dans la zone de préchambre (3) est formée latéralement par des parois (20.1, 20.2) qui suivent le prolongement des limites latérales des sections de guidage (18.1, 18.2) et sont formées d'une seule pièce avec les limites latérales des sections de guidage (18.1, 18.2) réalisées sous forme de parois (20.1, 20.2).

7. Convoyeur à bande selon l'une quelconque des revendications 1 à 6, **caractérisé en ce qu'**en vue du remplissage du convoyeur à bande (1), celui-ci dispose d'un agencement de trémies d'appoint (22), dont les trémies (23.1, 23.2) se rétrécissent dans la direction transversale à la direction de transport (15) de la bande transporteuse (4) et la préchambre (21) de chaque section de guidage (18.1, 18.2) est conçue de manière à se rétrécir dans la direction de transport (15).

8. Convoyeur à bande selon l'une quelconque des revendications 1 à 7, **caractérisé en ce que** les tubes de remplissage (6.1,..., 6.5) présentent une sortie (9) pour le raccordement à une ouverture supérieure (14) d'un tube de catalyseur (8) à remplir, et le convoyeur à bande (1) comprend une bande transporteuse (4) pour le transport du matériau catalytique de la zone de préchambre (3) à la zone de remplissage (5), dans lequel au moins un tube de remplissage (6.5) est en forme d'entonnoir sur au moins la majeure partie de son étendue et/ou **en ce que** l'au moins un tube de remplissage (6.1,..., 6.5) est réalisé dans un matériau souple et élastiquement déformable, de sorte que l'au moins un tube de remplissage (6.1,..., 6.5) est élastiquement déformable dans sa section transversale.

9. Convoyeur à bande selon la revendication 8, **caractérisé en ce que** l'au moins un tube de remplissage (6.1,..., 6.5) est constitué d'un tuyau textile et/ou d'une bâche en plastique.

10. Convoyeur à bande selon l'une quelconque des revendications 8 ou 9, **caractérisé en ce que** l'au moins un tube de remplissage (6.5) présente un angle de paroi (24)de 50 degrés maximum et en particulier de 75 degrés maximum.

11. Convoyeur à bande selon l'une quelconque des revendications 1 à 10, **caractérisé en ce que** le convoyeur à bande (1) comprend également :
- un châssis (2) pour le déplacement du convoyeur à bande (1) et
- une bande transporteuse (4) pour le transport du matériau catalytique de la zone de préchambre (3) à la zone de remplissage (5),
dans lequel l'extrémité inférieure de la sortie (9) des au moins deux tubes de remplissage (6.1,..., 6.5) pointant vers le tube de catalyseur (8) à remplir fait saillie avec une section d'insertion (7) à une certaine hauteur à travers un plan debout (10) formé par l'extrémité inférieure du châssis (2) pendant le remplissage du tube de catalyseur (8), de sorte que la section d'insertion (7) fait saillie dans le tube de catalyseur (8) pendant le remplissage, dans lequel la zone de remplissage (5) est montée de manière à être réglable en hauteur par rapport au plan debout (10), de sorte que pendant un déplacement du transporteur à bande (1) sur le plan debout (10), la section d'insertion (7) est disposée avec son extrémité inférieure de la sortie (9) au-dessus du plan debout (10).

12. Transporteur à bande selon la revendication 11, **caractérisé en ce que** la zone de remplissage (5) est montée de manière réglable en hauteur par rapport au châssis (2).

13. Convoyeur à bande selon la revendication 11 ou 12, **caractérisé en ce que** l'au moins une préchambre (21) de la zone de préchambre (3), la bande transporteuse (4) et la zone de remplissage (5) sont construites sur un châssis de transport (12), lequel châssis de transport (12) est monté de manière réglable en hauteur par rapport au châssis (2).

14. Convoyeur à bande selon la revendication 13, caractérisé ence que le châssis de transport (12) est réglable en hauteur parallèlement au plan debout (10) par rapport au châssis (2).

15. Convoyeur à bande selon la revendication 13 ou 14, **caractérisé en ce qu'**au moins un pied de support est raccordé à la zone de remplissage ou au châssis du convoyeur, avec lequel la zone de remplissage ou le châssis du convoyeur est soutenu sur le plan debout pendant le remplissage du tube de catalyseur.
